# EUROPEAN PATENT APPLICATION

(11) **EP 1 947 846 A1**
(43) Date of publication of application: **23.07.2008**
(21) Application number: 07254586.6
(22) Date of filing: 26.11.2007
(51) Int. Cl.: H04N 5/783, H04N 9/804, G11B 27/34

(54) **Video recording and reproducing apparatus and method of reproducing video in the same**

(30) Priority: 18.12.2006 JP 2006339992
(71) Applicant: Hitachi, Ltd., Chiyoda-ku Tokyo 100-8280 (JP)
(72) Inventor: Tsuruga, Sadao, Tokyo 100-8220 (JP); Kanemaru, Takashi, Tokyo 100-8220 (JP); Yamamoto, Yuji, Tokyo 100-8220 (JP); Watanabe, Mitsunobu, Tokyo 100-8220 (JP)
(74) Representative: Calderbank, Thomas Roger

(57) **Abstract**

When performing special reproduction with a video recording and reproducing apparatus that reproduces anAV stream, a controller of the video recording and reproducing apparatus calculates a reproduction position in AU at desired time by referring to a timestamp that is added to the head of AU of two adjacent AV streams, gives an instruction of an I-picture exclusive mode to output only I-pictures to a decoder, and reproduces an I-picture.

With such arrangement, in a video recording and reproducing apparatus which records and reproduces digital TV broadcasting, it becomes possible to execute special reproduction such as fast-forwarding reproduction of data in which MPEG2-TS is recorded even if the data does not contain position information of I-picture such as SI.

## Description

The present invention relates to a video recording and reproducing apparatus and a method of reproducing video, and more specifically to a video recording and reproducing apparatus which records and reproduces MPEG2-TS (transport stream), a video recording and reproducing apparatus that is suitably used for a method of special reproduction of video, and the method of the reproduction of video.

In recent years, conventional analogue broadcasting is being shifted to digital broadcasting in the field of television broadcasting service.

For the digital broadcasting picture compression technologies that picture data is transmitted after being compressed can be used, and, as a virtual standard of the picture compression technologies related to digital broadcasting, an MPEG system has been widely prevalent.

With the digital television broadcasting using the MPEG technology, data is transmitted to TV sets from a broadcasting station in the form of MPEG2-TS (transport stream) which is time-division multiplexed in comparatively short transmission units (transport packets).

The MPEG2-TS received by a TV set is decoded by a decoder and is then output to a window display unit or a voice output apparatus as AV data.

The MPEG2-TS thus received is temporarily recorded on a recording apparatus or media such as an HDD (hard disk drive), an optical disk, a magnet-optical disk and a storage medium that utilize a magnetic disk, and other media utilizing semiconductors such as, for example a card-type media, which also allows reproduction and viewing as required by a viewer. At this time, a user can use special reproduction functions during reproduction, such as fast-forwarding reproduction, rewinding reproduction and jumping reproduction. A technology concerning a method, etc. for recording MPEG2-TS on a storage device or a medium has been disclosed in JP-A-2003-257157, for example.

Meanwhile, with the MPEG2 standard, when encoding a picture, it has a function not only to directly encode picture data of all frames, but also to refer to data of neighboring frames that are already encoded and encode only difference from the data. In general, since, in the case of a motion picture, neighboring frames correlate highly each other, it is expected that amount of information after encoding can be significantly reduced by encoding only difference from the neighboring frames.

According to the MPEG standard, frames (pictures) are classified into three picture types: an Intra (I) picture, a Predictive (P) picture, and a Bidirectionally predictive (B) picture.

The I-picture is a frame (picture) that executes encoding by maintaining independence among Group of Pictures (GOP) without referencing to data of other frames (pictures). On the other hand, the P-picture is a frame (picture) that executes encoding by referring to past I-pictures or P-pictures, and the B-picture is a frame (picture) that executes encoding by referring to past and future I-pictures or P-pictures. As a result, encoding efficiency becomes higher in the order of I, P and B, which means the I-picture has the lowest encoding efficiency. However, the I-picture has an advantage that an I-picture can be decoded only with a frame (picture).

Therefore, for conducting special reproduction such as fast forwarding, a picture is decoded by picking out I-picture only. JP-A-2005-197839 discloses a method for executing special reproduction of a transport stream by storing and reading position information of an I-picture on and from a recording medium such as an HDD.

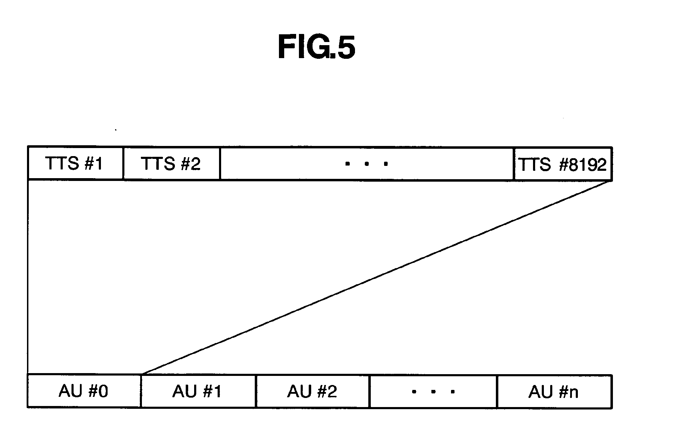

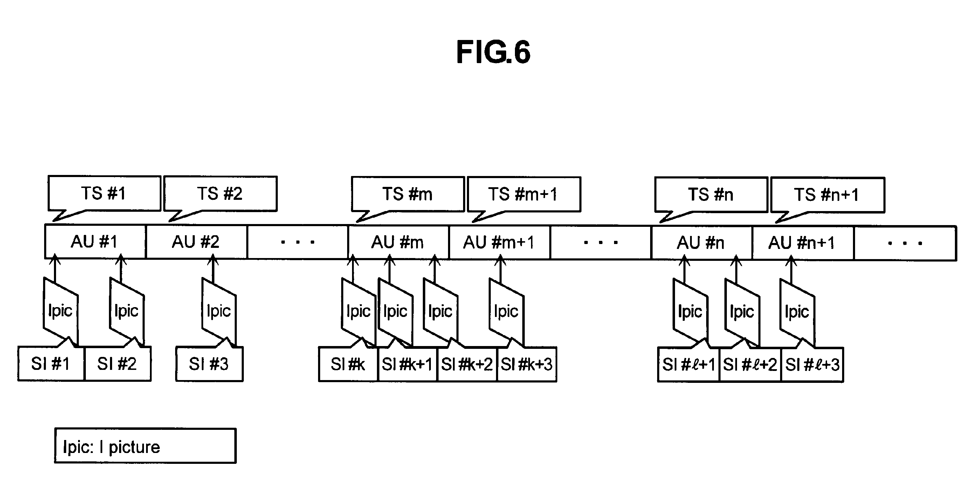

Hereinafter, an example of data structure for storing AV stream content such as picture data and voice data on a recording medium will be described with reference to Figs. 5 and 6.

Fig. 5 is a schematic diagram showing an example of relationship between a TTS packet and an AU in an AV stream to be stored on a recording medium.

Fig. 6 is a schematic diagram showing an example of relationship among an AU, an I-picture and associating information in an AV stream to be stored on a recording medium.

For a transport packet having 188-byte length according to the MPEG standard, 4-byte time information (for example, the time when the receiver received a transport packet) is added to the packet head, and the transport packet is recorded on a recording medium such as an HDD as a TTS packet having 188-byte length. In the time information, timestamp information at the time of arrival of the transport packet is stored.

As shown in Fig. 5, 8,192 TTS packets make up an AU (Allocation Unit). The size of each AU will be 1.5M bytes.

In a TTS packet in an AU, a TTS packet which contains the above-stated I-picture in the payload of the transport packet exists.

The reference symbol SI implies information that controls search/access units for reproducingAV streams which are recorded on a recording medium in units of the above-stated AU and the information is recorded as a file independent from AU's. Information concerning position such as an I-picture and GOP is recorded on SI.

On the other hand, a file that records control information of AU is AUI (Allocation Unit Information) . In the AUI, arrival time of the first TTS packet of an AU (for example, the time when the receiver received a transport packet) is recorded as TS (Timestamp) information.

The related art described above refers to a method that, for executing special reproduction of MPEG-2 TS, position information of an I-picture is stored in a recording medium in advance and is then utilized.

However, in the above-stated related art, it is necessary to have picture data searched in advance to execute the special reproduction. In addition, the recording medium requires an area for storing a position information file of an I-picture.

Further, for installing MPEG2-TS that is recorded in a recording medium on another apparatus for reproduction, compatibility of data between apparatuses and functions will be a problem. However, with the above-stated related art, there was a problem that special reproduction is not possible if the data does not have position information of I-picture.

As stated above, there are various problems for creating position information of I-picture, and, sometimes, there may be a case that it is difficult to store the information . Therefore, with an AV stream that does not have SI, the problem that an I-picture required for conducting special reproduction cannot be extracted successfully cannot be resolved.

Therefore, for example, a video recording and reproducing apparatus that is capable of executing special reproduction of data in which MPEG2-TS is recorded in a recording medium the MPEG format even if position information of I-picture such as SI is not contained may be provided.

More specifically, time when the head TTS packet of each AU is reproduced is acquired by extracting TS contained in independent AUI and a reading position may be obtained in the AU.

Then, a controller instructs a decoder to output an I-picture only.

According to the above-stated means,specialreproduction of data in which MPEG2-TS is recorded can be performed, even if the data does not contain position information of I-picture .

### IN THE DRAWINGS

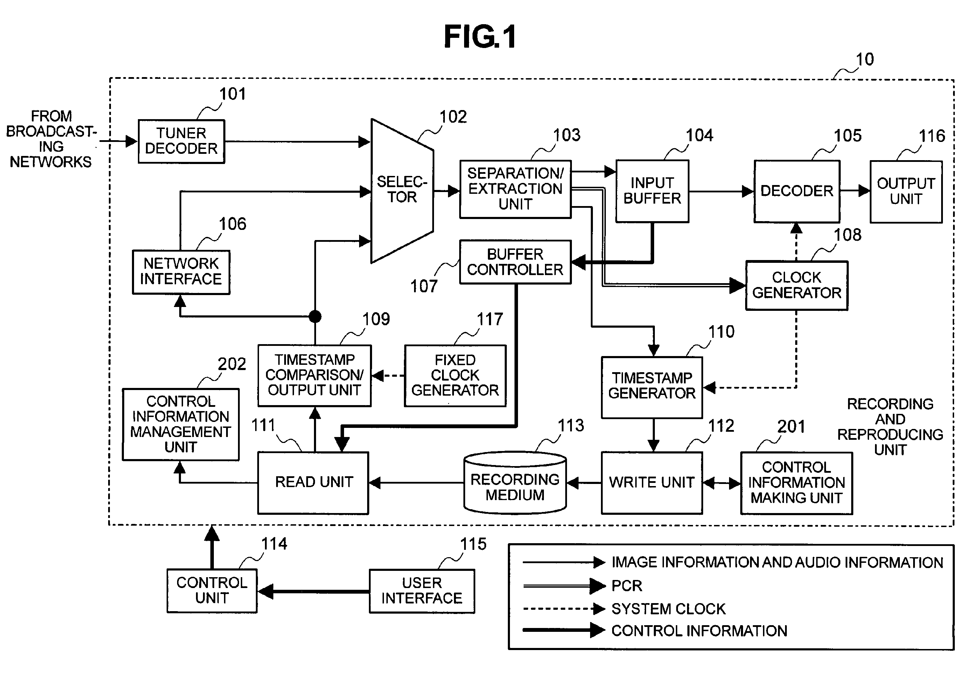

Fig. 1 is a block diagram illustrating a configuration example of a video recording and reproducing apparatus according to the first embodiment.

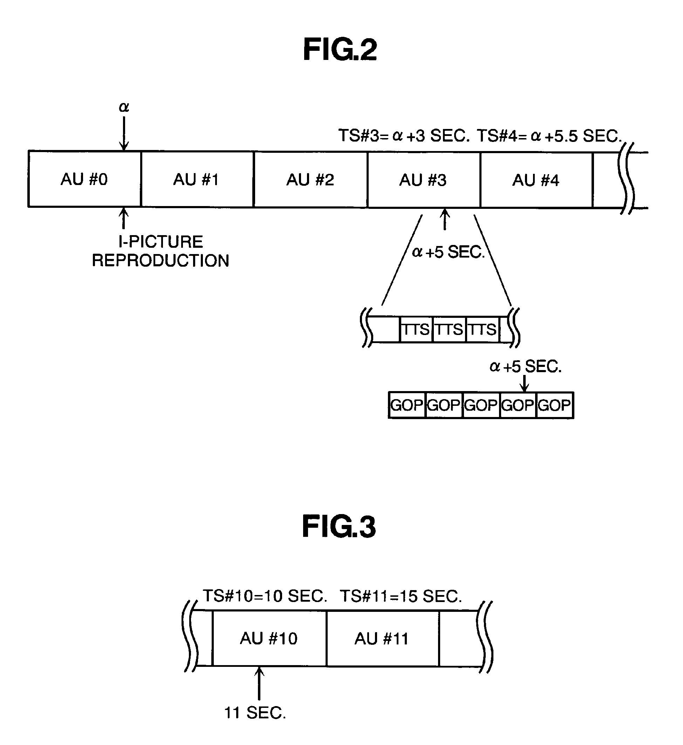

Fig. 2 is a diagram illustrating an AV stream of video recording and reproducing apparatus according to a preferred embodiment (No. 1).
Fig. 3 is a diagram illustrating an AV stream of a video recording and reproducing apparatus according to a preferred embodiment (No. 2).

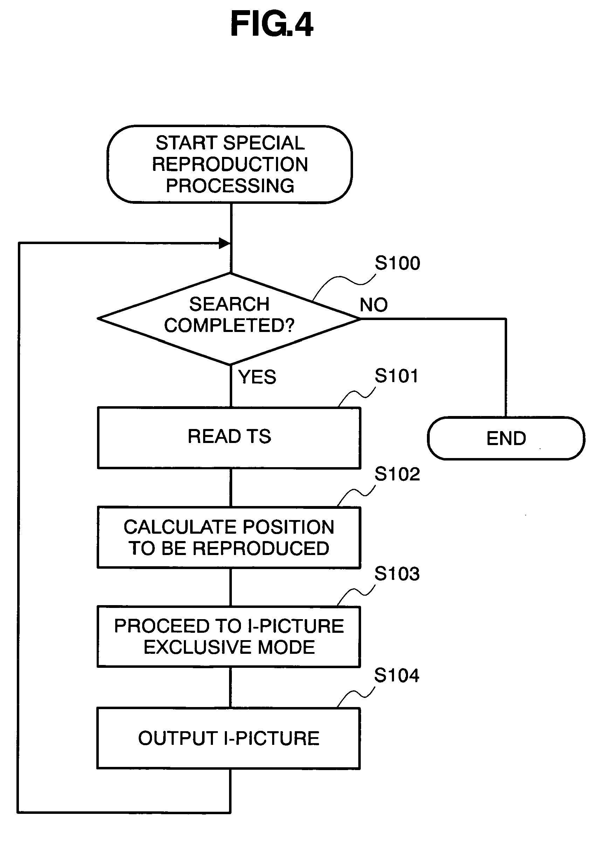

Fig. 4 is a flow chart illustrating an example of special reproduction processing of a video recording and reproducing apparatus according to a preferred embodiment.
Fig. 5 is a schematic diagram illustrating an example of relationship among TTS packets and AU's in an AV stream.
Fig. 6 is a schematic diagram illustrating an example of relationship among AU's, I-pictures and associating information of an AV stream.

Hereinafter, a first embodiment according to the present invention will be described with reference to Figs. 1 through 4.

First, configuration of a video recording and reproducing apparatus according to the first embodiment will be described with reference to Fig. 1.

Fig. 1 is a block diagram illustrating a configuration example of a video recording and reproducing apparatus according to the first embodiment.

The video recording and reproducing apparatus according to the embodiment is a video recording and reproducing apparatus which executes recording and reproducing by receiving digital broadcasting. Further, for an example of picture compression technologies, the case where a signal that is encoded and multiplexed under the Moving Picture Experts Group (MPEG) standard will be described.

With the configuration example, each element is described as a hardware element. However, part of the elements may be realized by software elements. In addition, the configuration may be applied for transmitting picture content, voice content, etc. to specified users in the form of VOD (Video On Demand) or the like. Such transmission means are generically referred to as distribution sometimes.

The video recording and reproducing apparatus shown in Fig. 1 includes a recording and reproducing unit 10, a control unit 114 (for example, CPU (Central Processing Unit)) and a user interface 115 (for example, a keyboard, a mouse and a remote controller as input devices).

The control unit 114 is connected via a bus unit to various units (including the recording and reproducing unit 10) of the video recording and reproduction apparatus and controls operations of the entire video recording and reproduction apparatus. Further, the control unit 114 receives various command signals from a user via a remote controller of the user interface 115 and, based on the command signals, executes various types of processing by controlling respective units that are connected via the bus unit.

The recording and reproducing unit 10 includes a tuner decoder 101, a selector 102, a separation/extraction unit 103, an input buffer 104, a decoder 105 (for example, an MPEG decoder), a network interface 106, a buffer controller 107, a clock generator 108, a timestamp comparison/output unit 109, a timestamp generator 110, a read unit 111, a write unit 112, a recording medium 113, an output unit 116, and a fixed clock generator 117 (for example, a crystal oscillator).

Here, the recording medium 113 is a medium, such as a hard disk, memory, an optical disk, a magnet-optical disk and a magnetic disk, to which random access is possible. The output unit 116 is a display unit that utilizes, for example, a CRT (Cathode Ray Tube), an LCD (Liquid Crystal Display), a PDP (Plasma Display Panel) or the like, a voice output unit using a loudspeaker or the like, or an output terminal which outputs picture data/voice data to another display device, etc.

It is to be noted that, as for positions at which lines indicating flows of information, PCR, etc. are crossing, it shall be understood that the lines do not contact each other, provided that the points marked with black round dots show that the lines contact each other and are branched at the points.

The tuner decoder 101 receives a digital broadcasting signal from a broadcasting station via broadcast transmission networks such as satellite broadcast, terrestrial broadcast, cable broadcast, etc. The tuner decoder 101 makes tuning to and applies detection on frequencies of a physical or virtual channel that is specified via a user operating unit such as the remote controller of the user interface 115 and the controller 114. Further, the tuner decoder 101 outputs MPEG2-TS (transport stream), which is obtained after digital decoding and error correction are applied, to the selector 102.

The selector 102 executes selection of 3 inputs and 1 output as controlled by the controller 114 and outputs the output to the separation/extraction unit 103.

The separation/extraction unit 103 separates and extracts a transport packet of the channel (TV program) that is specified via a user operation unit such as a remote controller of the user interface unit 115 and the control unit 114 from the inputted MPEG2-TS, and outputs the transport packet thus separated and extracted to the timestamp generator 110. Further the separation/extraction unit 103 separates and extracts a PES (Packetized Elementary Stream) or an ES (Elementary Stream) of a picture and voice from a transport packet of the channel (TV program) that is specified via a user operation unit such as a remote controller of the user interface unit 115 and the control unit 114 and outputs the PES or the ES to the input buffer 104.

An ES implies picture/voice data itself that is compressed/encoded, and a PES implies a picture ES or a voice ES that is divided and packetized into an adequate size. Further, the separation/extraction unit 103 extracts PCR (Program Clock Reference) from the transport packet of the channel (TV program) that is specified via a user operation unit such as a remote controller of the user interface unit 115 and the control unit 114 and outputs the PCR to the clock generator 108.

The input buffer 104 temporarily stores a PES or an ES of a picture/voice delivered from the separation/ extraction unit 103. The decoder 105 compares a DTS (Decoding Time Stamp) /PTS (Presentation Time Stamp) that corresponds to a PES or an ES that is stored in the input buffer 104 and a count value of STC (System Time Clock) from the clock generator 108 and sets timing of decoding and displaying to abstract and decode a PES or an ES of a picture/voice, and the picture/voice thus decoded is output to the output unit 116.

The output unit 116 reproduces the decoded picture/voice in the display unit/voice output unit which is an output device. Alternatively, the output unit 116 outputs content data of picture/voice, etc. to another display device, etc. via an output terminal or the like.

The clock generator 108 reproduces, by using PCR, a system clock of a receiver whose frequency matches with, for example the system clock of a encoding/multiplexing unit at a broad casting station. The clock generator 108 outputs system clock thus reproduced to the STS counter, the timestamp comparison/output unit 109, the timestamp generator 110, etc. In addition, the clock generator 108 outputs an STC count value of the STC counter which operates based on the reproduced system clock to the decoder 105.

The timestamp generator 110 generates a timestamp by using a counter which is operated based on, for example, a system clock that is reproduced by the clock generator 108 or a crystal oscillator, adds a timestamp to each of the transport packets that are separated and extracted by the separation/extracting unit 103, and outputs the transport packets to a write unit 112.

The write unit 112 executes processing to record the transport packets to which a timestamp is added by the timestamp generator 110 in a recording unit 113. As a result, a stream containing a plurality of transport packets to which a timestamp that contains picture/voice data of a certain channel (in other words, content of a certain TV program, downloaded content) is added is stored in the recording medium 113 as a data file or two or more fragmented data files that is created by dividing the foregoing data file.

It should be noted that a timestamp can also be referred to as time information concerning time-related position of a transport packet to which the stamp is added. For example, it is also referred to as the time when a transport packet from the separation/extraction unit 103 is input to the timestamp generator 110, or time-related difference from a certain transport packet (for example, the last or the head transport packet) that is determined to be the reference. The timestamp, as stated in the above, is different from a timestamp (for example, a DTS or PTS) that is preliminarily contained in the transport packet.

The buffer controller 107 monitors amount of transport packets in the input buffer 104 that are not processed in the decoder 105 yet, and controls starting and stopping of reading at a read unit 111 according to the amount monitored.

The read unit 111 is controlled via the buffer controller 107 or the controller 114 . The read unit 111 sequentially reads a plurality of transport packets, which are contained in a stream and to which a timestamp is added, from the recording medium 113 and outputs the transport packets to the timestamp comparison/output unit 109.

The timestamp comparison/output unit 109 compares a count value of a counter which operates based on a fixed clock generator 117 such as a crystal oscillator and a timestamp of the transport packet which is read by the read unit 111 and to which a timestamp is added. If the count value and the timestamp coincide, the timestamp comparison/output unit 109 deletes (removes) the timestamp from the transport packet and outputs the transport packet to the selector 102 and the IEEE1394/network interface 106.

To the network interface 106, other devices which are output destinations or input sources (a recorder, a display unit, etc.) via a line (an IEEE1394 cable, a LAN cable, a wireless line, etc.) are connected. Then, the network interface 106 receives transport packets of picture, voice, etc. from which a timestamp is deleted in the timestamp comparison/output unit 109, converts the transport packets into formats that match respective transmission standards and outputs the packets to other devices that are output destinations via the line. In addition, the network interface 106 inputs data of a picture, voice, etc. from other devices that are input sources via a line in formats that match respective transmission standards, converts the data into transport packets, and outputs the packets to the selector 102. A plurality of network interfaces may be arranged.

Further, a control information making unit 201 is a unit that creates control information such as AUI or SI for an AV stream.

A control information management unit 202, upon receiving an instruction from the controller 114, reads AUI that contains TS information, etc.

Next, special reproduction processing of a video recording and reproducing apparatus according to a preferred embodiment will be described with reference to Figs. 2 through 4.

Figs. 2 and 3 are diagrams illustrating an example of an AV stream of video recording and reproducing apparatus according to a preferred embodiment.

Fig. 4 is a flow chart illustrating an example of special reproduction processing of a video recording and reproducing apparatus according to a preferred embodiment.

Special reproduction processing includes, for example, fast-forwarding reproduction (to change reproduction speeds), rewinding reproduction, jump reproduction (to reproduce at specified picture time or position), and resume reproduction (to specify a picture position at which reproduction is resumed from the stop status and to reproduce at that position). With the embodiment, since it is arranged to search an I-picture position at desired time, the embodiment can be applied to various types of special reproduction processing.

Here, a case shall be assumed wherein an AV stream as shown in Fig. 2 is recorded, and 10x fast-forwarding reproduction processing that outputs an I-picture for every 0.5 seconds.

It should be noted that the GOP period is 0.5 seconds.

Therefore, when an I-picture is reproduced at time á of AU#0, it is necessary to search the position of the I-picture that is to be reproduced five seconds later at the time of 1x reproduction of an AV stream.

The controller 114 shown in Fig. 1 instructs the control information management unit 202 to read a TS contained in AUI (S101) .

Next, the controller 114 calculates the reproduction position of the AV stream based on the AUI that is read by the control information management unit 202 (S102).

As shown in Fig. 2, if it is assumed that TS#3 of AU#3 indicates time elapsed 3 seconds from the previous reproduction of the I-picture, or more specifically á+3 seconds, and TS#4 of AU#4 indicates time elapsed 5.5 seconds from the previous reproduction of the I-picture, or more specifically á+5.5seconds, reproduction can be executed by using proportional distribution at a position of: Length of AU (1.5M bytes) x (5-3) / (5.5-3) = 1 . 5M bytes x (4/5). However, it is preferable, from a practical standpoint, to control reproduction to be started at a position a little earlier.

Further, it is also possible, by checking the timestamp contained in time information of the TTS packet in AU, to start reproduction at the TTS packet position which corresponds to a position two seconds after the reproduction time of the leading packet. Also in this case, it is preferable to control reproduction to be started at a position a little earlier.

Furthermore, it is also possible to reproduce an I-picture that is contained in the fifth AU by detecting GOP of AU#3 (0.5 seconds x (5-1) = 2 seconds).

The controller 114 calculates a reproduction position by using either of the above-stated methods and gives an instruction to the recording and reproducing unit 10 to start reproduction at that position.

Simultaneously, the controller 114 gives an instruction so that the decoder 105 of the recording and reproducing unit 10 will be operated under the I-picture exclusive mode which combines only I-pieces of I-pictures and notifies end of combination, by using interruption means, etc. (S103).

Then, the controller 114, by using the interruptionmeans, etc., receives a report that an I-picture is output from the decoder 105 of the recording and reproducing unit 10 (S104). Next, the controller 114 repeats the above-stated operations to reproduce only I-pictures at a position á+10 seconds, which is the next read position.

The controller 114 repeats such operations until an AV stream of a TV program ends, or the fast-forwarding reproduction ends (S100).

For rewinding reproduction, it can be easily understood that reproduction becomes feasible by executing the above-stated processing in a negative direction.

Further, reproduction of a jump point or a resume point is also possible by using TS information of AUI. For example, it shall be assumed that a certain resume point is set 11 seconds after the start of a TV program. The condition shall be stored as user-defined information.

Then, as shown in Fig. 3, if TS#10 of AU#10 indicates time elapsed 10 seconds from the start of a TV program, and TS#11 of AU#11 indicates time elapsed 15 seconds from the start of the TV program, an I-picture can be reproduced at a position that is located at the 1/5 position from the head of AU#10, provided that, however, it is preferable, from a practical standpoint, to control reproduction to be started at a position a little earlier.

Further, with the above-stated embodiment, special reproduction using TS information was described. However, a method for determining a reproduction position based on TS information may also be used for determining a division position of an AV stream. With the method, a function to divide a recorded TV program becomes feasible.

In addition, for creating reproduction sequence information such as a play list, the method for determining reproduction positions of respective TV programs based on the TS information according to the above-stated embodiment can be used.

Further, with the above-stated embodiment, the GOP period was set at 0.5 seconds. However, for a period other than the 0.5-second period, the GOP period can precisely be detected, for example, by measuring time from the time point when a combination end interruption of an I-picture is generated in the controller 114 to the time point when the next combination end interruption of an I-picture is generated, which is realized, for example, by notifying end of combination of the I-picture by using means such as interruption in the decoder 105 during reproduction of an AV stream. The above-stated method can be utilized by executing processing that is suitable to the detection result.

Further, withtheabove-statedembodiment, itwas arranged that an I-picture is output for every 0.5 seconds for special reproduction. However, it may also be arranged to output an I-picture for every 0.25 seconds, and the similar method may be used by executing processing that is suitable to the output time period.

Further, with the above-stated embodiment, description was made by assuming digital TV broadcasting using a broadcast wave. However, the embodiment can also be applied to an Internet TV sets using a network such as the Internet or to data that is acquired by downloading content.

Furthermore, with the above-stated embodiment, MPEG was taken as an example as a picture compression technology. However, the embodiment may also be applied to other picture compression technologies such as H.264. In this case, an I-picture referred to in the above description may be processed as an IDR (Instantaneous Decoder Refresh) picture (frame).

## Claims

1. A video recording and reproducing apparatus which receives content information that is transmitted together with a plurality of pieces of information, each of which is converted into a unit packet prescribed in advance,
configures, among packetized information to which unit time information is added, wherein reception time of the packetized information in units received is added to each of the packetized information contained in the received content information, a unit information group according to the preliminarily-set number of packetized information to which unit time information is added,
generates reception time information that contains reception time of the packetized information to which unit time information is added and which is first received, among the packetized information to which unit time information is added and which is included in the unit information group, and
records the unit information group generated and the reception time information generated in a recording medium, the video recording and reproducing apparatus including:
a recording and reproducing unit which reproduces the recorded unit information group; and
a controller which calculates a reproduction position based on the reception time information, wherein
the controller calculates a reproduction position in a unit information group at desired time and instruct the recording and reproducing unit to start reproduction at the position.

2. The video recording and reproducing apparatus according to claim 1, wherein
the recording and reproducing unit includes a decoder, gives an instruction, when giving an instruction for reproduction, to proceed to an I-picture exclusive mode for outputting only an I-picture and to output only an I-picture.

3. A video recording and reproducing apparatus which receives content information that is transmitted together with a plurality of pieces of information, each of which is converted into a unit packet prescribed in advance,
configures, among packetized information to which unit time information is added, wherein reception time of the packetized information in units received is added to each of the unit-packetized information contained in the received content information, a unit information group according to the preliminarily-set number of packetized information to which unit time information is added,
generates reception time information that contains reception time of the packetized information to which unit time information is added and which is first received, among the packetized information to which unit time information is added and which is included in the unit information group, and
records the unit information group generated and the reception time information generated in a recording medium, the video recording and reproducing apparatus including:
a recording and reproducing unit which reproduces the recorded unit information group; and
a controller which calculates a reproduction position based on the reception time information, wherein
the controller refers to the reception time information and reception time contained in packetized information to which unit time information is added and which is included in associating unit information group, calculates a reproduction position in a unit information group at desired time and instruct the recording and reproducing unit to start reproduction at the position.

4. The video recording and reproducing apparatus according to claim 3, wherein
the recording and reproducing unit includes a decoder, gives an instruction, when giving an instruction for reproduction, to proceed to an I-picture exclusive mode for outputting only an I-picture and to output only an I-picture .

5. A method of reproducing a video in a recording and reproducing apparatus which
receives content information that is transmitted together with a plurality of pieces of information each of which is converted into a unit packet prescribed in advance,
configures, among packetized information to which unit time information is added, wherein reception time of the packetized information in units received is added to each of the packetized information that is contained in the received content information, a unit information group according to the preliminarily-set number of packetized information to which unit time information is added,
generates reception time information that contains reception time of the packetized information to which unit time information is added and which is first received, among the packetized information to which unit time information is added and is contained in the unit information group,
records the unit information group generated and the reception time information generated in a recording medium, and
includes a recording and reproducing unit which reproduces the recorded unit information group, and a controller which calculates a reproduction position based on the reception time information, the method comprising steps of:
calculating a start time of the next reproduction;
reading reception time information of a unit information group to be reproduced;
calculating, based on the reception time information, a reproduction position corresponding to the start time of the reproduction in a unit information group; and
shifting the unit information group to an I-picture exclusive mode which reproduces I-pictures only from the reproduction position and reproducing an I-picture.
